# FASCICULE DE BREVET EUROPEEN

(11) **EP 3 588 337 B1**
(45) Date de publication et mention de la délivrance du brevet: **18.05.2022**
(21) Numéro de dépôt: 19181361.7
(22) Date de dépôt: 19.06.2019
(51) Int. Cl.: G06F 21/10, H04L 29/06, H04W 12/08

(54) **PILOTAGE D'UN DISPOSITIF DE STOCKAGE DE DONNEES**
STEUERUNG EINER DATENSPEICHERVORRICHTUNG
CONTROL OF A DATA STORAGE DEVICE

(30) Priorité: 21.06.2018 FR 1855481
(43) Date de publication de la demande: 01.01.2020
(73) Titulaire: ORANGE, 92130 Issy-les-Moulineaux (FR)
(72) Inventeur: GAILLET, Thierry, 92326 Châtillon Cedex (FR)
(74) Mandataire: Plasseraud IP

(56) Documents cités:
- US-A1- 2004 095 382
- US-A1- 2016 085 564
- US-A1- 2016 359 862
- US-A1- 2016 378 976

## Description

La présente invention se rapporte à un procédé de pilotage d'un dispositif de stockage de données, ainsi qu'un dispositif pour la mise en œuvre de ce procédé. Elle s'applique notamment aux dispositifs de stockage de données portables, comme par exemple une clé USB (pour « Universal Serial Bus » en anglais), une carte SD, ou un disque mémoire amovible.

De nos jours, que ce soit dans le cadre professionnel ou privé, il est fréquent d'échanger des données, tant en ligne que via des supports physiques, ce qui pose des problèmes de protection et de sécurisation de ces données, notamment au cours de ces échanges.

En particulier, quand un utilisateur souhaite obtenir des fichiers d'une tierce personne en partageant une clé USB, il peut lui être délicat de laisser la tierce personne accéder aux fichiers déjà stockés sur la clé USB.

Il est connu de la société Apple Inc. une solution logicielle AirDrop (marque déposée) qui permet à un utilisateur de déposer des données sur le mobile, la tablette, ou l'ordinateur d'un autre utilisateur via une connexion sans fil (ou WiFi pour « Wireless Fidelity » en anglais).

Néanmoins, cette solution logicielle nécessite qu'une connexion sans fil soit disponible et que les deux personnes (utilisateur de l'équipement fournissant les données et utilisateur de l'équipement recevant les données) aient activé la fonction spécifique, qui reste par ailleurs propriétaire et restreinte au seul écosystème Apple. Document US 2016/359862 divulgue un premier et un deuxième profils d'applications pour définir les autorisations de lecture ou d'écriture de fichiers dans un stockage externe (carte SD) qui utilise des partitions privées. Document US 2016/378976 divulgue des profils de restriction des partitions de mémoires pour définir les autorisations de restrictions de lecture et/ou d'écriture. Document US 2004/095382 divulgue des profils d'utilisateurs pour permettre aux utilisateurs de définir des paramètres spécifiques à l'utilisateur concernant la définition du bureau et de l'environnement opérationnel. Document US 2016/085564 divulgue des profils d'utilisateurs pour configuration de la ressource informatique et pour détermination de préférences personnelles des utilisateurs.

Un objet de la présente invention est de remédier au moins partiellement aux inconvénients précités.

Un autre objet de la présente invention est de proposer une solution simple d'utilisation tout en s'adressant à un plus large public, quel que soit l'écosystème utilisé.

Selon un premier aspect, il est proposé un procédé de pilotage d'un dispositif de stockage de données, comprenant : sur détection d'une utilisation du dispositif par un utilisateur par connexion à un équipement informatique, déterminer si l'utilisateur correspond à un identifiant associé à un premier profil utilisateur comprenant des droits d'accès autorisant au moins l'écriture et la lecture de données dans une mémoire du dispositif de stockage de données ; s'il est déterminé que l'utilisateur correspond à l'identifiant associé au premier profil utilisateur, commander l'utilisation du dispositif de stockage de données selon le premier profil utilisateur ; et s'il est déterminé que l'utilisateur ne correspond pas à l'identifiant associé au premier profil utilisateur, commander l'utilisation du dispositif de stockage de données selon un deuxième profil utilisateur comprenant des droits d'accès permettant l'écriture de données dans la mémoire du dispositif de stockage de données et interdisant au moins la lecture, dans la mémoire du dispositif de stockage de données, de données qui n'ont pas été précédemment écrites par l'utilisateur.

Ainsi, le pilotage d'un dispositif de stockage de données peut être effectué en utilisant un premier profil utilisateur prévu pour permettre a minima l'écriture et la lecture de données en mémoire du dispositif de stockage de données, et un deuxième profil utilisateur prévu pour a minima interdire la lecture de données stockées en mémoire du dispositif et qui n'ont pas été précédemment écrites en mémoire par l'utilisateur ayant ce deuxième profil. Dès lors, tout utilisateur ayant le deuxième profil utilisateur peut écrire des données en mémoire du dispositif de stockage, mais, ne disposant pas de droits d'accès en lecture, ne peut pas voir les données qui auront été écrites en mémoire du dispositif de stockage à l'exception de celles que l'utilisateur aura lui-même écrites, ce qui garantit avantageusement la confidentialité des données stockées en mémoire du dispositif de stockage, vis-à-vis des utilisateurs autres que ceux associés au premier profil utilisateur tout en permettant à un utilisateur de deuxième profil de contrôler les écritures qu'il a faites en mémoire du dispositif, par exemple en visualisant ces écritures à partir d'une interface utilisateur graphique.

La solution proposée a en outre l'avantage d'être indépendante et universelle, notamment en ce qu'elle n'est pas limitée à un écosystème particulier, que ce soit du point de vue du dispositif de stockage de données ou d'un équipement informatique avec lequel le dispositif est utilisé.

De plus, la solution proposée permet un stockage intermédiaire de données, en s'appuyant sur un dispositif de stockage qui peut être externe, physique et sécurisé. Cela évite un transfert de données directement entre deux équipements informatiques (par exemple entre un smartphone et un ordinateur personnel), ce qui n'est pas toujours souhaité des utilisateurs, et offre une alternative très utile dans les cas où ce transfert de données directement entre deux équipements informatiques n'est pas possible.

La solution proposée permet en outre avantageusement de partager des données entre plusieurs utilisateurs ou de se communiquer des données correspondant à tous types de contenus (présentations, photos, vidéos, enregistrements, etc.) en évitant l'utilisation de services d'envoi et/ou de partage en ligne, services qui prennent du temps, présentent des limitations en volume, et peuvent être considérés comme ne présentant pas un niveau de sécurité ou de confidentialité des données suffisant. Elle fournit donc une alternative qui diminue fortement les risques de vol de données ainsi que les risques de divulgation de données confidentielles.

Dans un ou plusieurs modes de réalisation, les droits d'accès compris dans le premier profil utilisateur autorisent en outre l'effacement de données dans la mémoire du dispositif de stockage de données et les droits d'accès compris dans le deuxième profil utilisateur interdisent en outre l'effacement de données dans la mémoire du dispositif de stockage de données. Dans ce cas de figure, les premier et deuxième profils utilisateur sont configurés pour être encore plus distincts (et distants de par les droits ouverts) l'un de l'autre. Cette plus grande distinction entre les deux profils permet de doter un utilisateur de premier profil de droits de lecture, écriture et effacement de données, tout en interdisant aux utilisateurs de deuxième profil d'effacer des données dans la mémoire du dispositif de stockage de données, y compris des données qu'ils ont eux-mêmes écrits en mémoire, ce qui renforce avantageusement, pour les utilisateurs de premier profil, la sécurité d'utilisation du dispositif par les utilisateurs de deuxième profil. Ainsi, du point de vue des utilisateurs de premier profil, l'utilisation du dispositif par des utilisateurs de deuxième profil est plus encadrée, et de ce fait mieux sécurisée. Par exemple, cela permet avantageusement une utilisation d'un dispositif détenu par un utilisateur de premier profil en partage avec d'autres utilisateurs qui ne sont pas de premier profil, sans qu'aucune relation de confiance n'existe entre l'utilisateur de premier profil et les autres utilisateurs du dispositif.

Dans un ou plusieurs modes de réalisation, les droits d'accès compris dans le deuxième profil utilisateur interdisent la lecture de toute donnée enregistrée en mémoire du dispositif de stockage de données. Ainsi, le pilotage d'un dispositif de stockage de données peut être effectué en utilisant un premier profil utilisateur prévu pour permettre a minima l'écriture et la lecture de données en mémoire du dispositif de stockage de données, et un deuxième profil utilisateur prévu pour a minima interdire la lecture de données stockées en mémoire du dispositif. Tout utilisateur ayant le deuxième profil utilisateur peut écrire des données en mémoire du dispositif de stockage, mais, ne disposant pas de droits d'accès en lecture, ne peut pas voir les données qui auront été écrites en mémoire du dispositif de stockage, ce quel que soit le profil utilisateur (premier ou deuxième profil) des utilisateurs ayant écrit des données en mémoire du dispositif de stockage, ce qui renforce encore davantage la confidentialité des données stockées en mémoire du dispositif de stockage, vis-à-vis des utilisateurs autres que ceux associés au premier profil utilisateur.

Dans un ou plusieurs modes de réalisation, les droits d'accès compris dans le deuxième profil utilisateur autorisent seulement l'écriture de données dans la mémoire du dispositif de stockage de données et l'accès à des informations relatives à une capacité de stockage de données disponible dans la mémoire du dispositif de stockage. Dans ce cas de figure, la sécurité d'utilisation du dispositif par les utilisateurs de deuxième profil est avantageusement encore plus grande. Par exemple, un utilisateur de deuxième profil pourra uniquement savoir s'il reste de l'espace mémoire disponible dans la mémoire du dispositif de stockage, et écrire des données (par exemple déposer des fichiers) en mémoire s'il reste suffisamment d'espace mémoire disponible.

Dans un ou plusieurs modes de réalisation, les droits d'accès compris dans le deuxième profil utilisateur sont applicables à une partition prédéfinie de la mémoire du dispositif de stockage de données. Une correspondance peut ainsi avantageusement être définie entre une partition mémoire créée dans l'espace mémoire du dispositif, par exemple pour être utilisée comme zone de dépose (« dropzone »), et les actions que peuvent effectuer un utilisateur de deuxième profil, ce qui facilite la gestion de l'espace mémoire du dispositif de stockage pour tenir compte des droits d'accès associés au deuxième profil utilisateur.

Dans un ou plusieurs modes de réalisation, le deuxième profil utilisateur comprend des droits d'accès interdisant l'accès à des informations relatives aux données stockées dans la mémoire du dispositif de stockage. Par exemple, le deuxième profil utilisateur comprend des droits d'accès interdisant l'affichage sur un dispositif d'affichage des informations relatives aux données stockées dans la mémoire du dispositif de stockage. Les droits d'accès associés au deuxième profil utilisateur peuvent ainsi être restreints de manière à interdire l'accès (par affichage ou par le biais d'une autre interface utilisateur) à des informations relatives aux données stockées en mémoire du dispositif, ce qui renforce avantageusement, pour les utilisateurs de premier profil, la sécurité d'utilisation du dispositif par les utilisateurs de deuxième profil, ainsi que la confidentialité des données stockées en mémoire du dispositif de stockage, vis-à-vis des utilisateurs autres que ceux associés au premier profil utilisateur.

Dans un ou plusieurs modes de réalisation, le deuxième profil utilisateur comprend des droits d'accès autorisant l'accès à des informations relatives à une capacité de stockage de données disponible dans la mémoire du dispositif de stockage. Ce cas de figure permet avantageusement à un utilisateur de deuxième profil de savoir s'il reste de l'espace mémoire disponible dans la mémoire du dispositif de stockage avant d'envisager d'y écrire des données, ce qui facilite la gestion de l'espace mémoire du dispositif par tous les utilisateurs, en évitant par exemple la situation où un utilisateur de deuxième profil, qui, en fonction du mode de réalisation, peut avoir ou non des droits d'accès en lecture en mémoire du dispositif, y compris dans une « dropzone » de la mémoire, commence à écrire des données en mémoire du dispositif alors que l'espace mémoire disponible est insuffisant pour l'écriture de ces données.

Dans un ou plusieurs modes de réalisation, dans lequel les droits d'accès compris dans le deuxième profil utilisateur autorisent seulement l'écriture de données dans la mémoire du dispositif de stockage de données. Les droits d'accès des utilisateurs de deuxième profil sont alors avantageusement limités à la seule écriture de données, ce qui rend maximum, pour les utilisateurs de premier profil, la sécurité d'utilisation du dispositif par les utilisateurs de deuxième profil, ainsi que la confidentialité des données stockées en mémoire du dispositif de stockage. Par exemple, le dispositif de stockage pourra être un support de stockage (clé USB, carte SD, disque amovible, etc.) sécurisé n'autorisant qu'un seul profil « owner » pour celui qui peut lire, éditer et supprimer les fichiers qui y sont déposés, et forçant un mode « guest » ou « write-only » pour tous les autres qui ne peuvent qu'y déposer des fichiers.

Dans un ou plusieurs modes de réalisation, l'identifiant associé au premier profil utilisateur est stocké dans la mémoire du dispositif de stockage de données. Cela facilite le pilotage du dispositif tel que proposé, notamment dans les cas où ce pilotage est mis en œuvre, du moins en partie, par un équipement autre que le dispositif de stockage, et permet à l'inverse, dans d'autres modes de réalisation, un fonctionnement complètement autonome du dispositif.

Dans un ou plusieurs modes de réalisation, la détermination d'une correspondance entre l'utilisateur et l'identifiant associé au premier profil utilisateur comprend une identification de l'utilisateur sur la base de l'identifiant associé au premier profil utilisateur. Cette détermination d'une correspondance entre l'utilisateur et l'identifiant associé au premier profil utilisateur peut en outre avantageusement comprendre une authentification de l'utilisateur sur la base de l'identifiant associé au premier profil utilisateur. Cette authentification permet avantageusement de renforcer la sécurité d'utilisation du dispositif, notamment dans les cas où les droits associés au premier profil utilisateur sont très largement ouverts (lecture, écriture (comprenant la modification), effacement de données).

Selon un autre aspect, il est proposé un dispositif de stockage de données, comprenant : un processeur, une mémoire, et une interface de transfert de données, configurée pour échanger des données avec un équipement informatique lorsque le dispositif de communication est connecté audit équipement informatique, dans lequel le processeur est configuré pour la mise en œuvre d'un procédé de pilotage du dispositif de stockage de données selon l'un des modes de réalisation proposés dans la présente description.

Le dispositif de stockage de données peut être mis en œuvre, en fonction du mode de réalisation choisi, sous la forme d'une clé USB, d'une carte SD, d'un disque mémoire amovible, etc. En outre, l'interface de transfert de données n'est pas limitée, par exemple de par sa configuration, à un équipement informatique particulier ou un type particulier d'équipement informatique. En fonction du mode de réalisation, l'interface de transfert de données pourra être configurée pour échanger des données avec différents équipements informatiques ou types d'équipement informatique, comme par exemple un ordinateur, un ordinateur personnel (PC), une tablette, un smartphone, une console industrielle, un tableau de bord de véhicule, un appareil photo, etc.

Selon encore un autre aspect, il est proposé un dispositif de stockage de données amovible comprenant un dispositif de stockage de données tel que proposé ci-dessus, dans lequel l'interface de transfert de données est de type Universal Serial Bus, USB.

Un autre aspect concerne un programme d'ordinateur, chargeable dans une mémoire associée à un processeur, et comprenant des portions de code pour la mise en œuvre d'un procédé tel que proposé dans la présente description lors de l'exécution dudit programme par le processeur.

Un autre aspect concerne un ensemble de données représentant, par exemple par voie de compression ou d'encodage, un programme d'ordinateur tel que proposé dans la présente description.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à piloter un dispositif de stockage non-transitoire de données selon un procédé de pilotage d'un dispositif de stockage de données selon l'un des modes de réalisation proposés dans la présente description.

D'autres particularités et avantages de la présente invention apparaîtront dans la description ci-après d'exemples de réalisation non limitatifs, en référence aux dessins annexés, dans lesquels :
- la figure 1 est un schéma illustrant un exemple d'architecture d'un dispositif de stockage de données pour la mise en œuvre d'un ou plusieurs modes de réalisation du procédé proposé ;
- la figure 2 illustre un partitionnement d'une mémoire d'un dispositif de stockage de données pour la mise en œuvre d'un ou plusieurs modes de réalisation du procédé proposé ; et
- la figure 3 est un schéma illustrant le procédé proposé selon un ou plusieurs modes de réalisation.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description. Le procédé proposé peut être mis en œuvre par tout type de dispositif de stockage de données, comme par exemple un support de stockage amovible ou un périphérique de stockage de données, tel qu'un disque dur portatif, une clé USB ou une carte SD (de l'anglais « Secure Digital »).

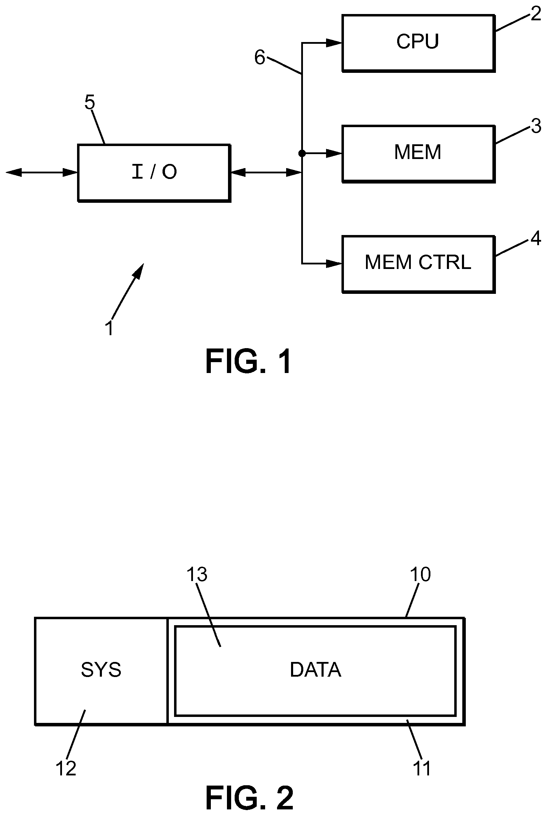

La **figure 1** illustre schématiquement un exemple de dispositif de stockage de données 1 configuré pour la mise en œuvre du procédé de pilotage proposé dans un ou plusieurs modes de réalisation.

Comme illustré sur la figure, le dispositif de stockage de données (1) peut comprendre une interface (5), un contrôleur (2), une mémoire (3), et une unité de gestion mémoire (4). Selon le mode de réalisation, l'interface (5), la mémoire (3), et l'unité de gestion mémoire (4) peuvent être couplées de manière opérationnelle au contrôleur (2) par un bus de communication (6), ou par tout lien de communication, comprenant éventuellement un ou plusieurs connecteurs matériels. Dans l'architecture du dispositif de stockage de données (1) illustré sur la figure 1, l'ensemble des interface (5), mémoire (3), unité de gestion mémoire (4), contrôleur (2) et bus de communication (6) forme un dispositif de stockage de données, qui peut par ailleurs inclure d'autres composants, unités, fonctions, non représentés sur la figure.

Le contrôleur (2) peut comprendre un ou plusieurs processeurs, comme une unité centrale (CPU) ou un autre processeur matériel, une mémoire associée (par exemple, une mémoire vive (RAM), une mémoire cache, une mémoire flash, etc.), et être apte à être configuré pour piloter l'interface (5), la mémoire (3), et l'unité de gestion mémoire (4), afin de commander l'utilisation du dispositif de stockage de données (1) selon un ou plusieurs modes de réalisation du procédé proposé, par exemple en exécutant un programme d'ordinateur comprenant des portions de code pour la mise en œuvre d'un procédé de pilotage du dispositif de stockage de données (1) tel que proposé dans la présente description. En fonction du mode de réalisation, la mémoire (3) et/ou une mémoire associé du contrôleur (2) contiennent des instructions qui, lorsqu'elles sont exécutées par le contrôleur (2), amènent ce contrôleur (2) à effectuer ou contrôler les parties interface (5) et/ou gestion mémoire (4) des exemples de mise en œuvre du procédé proposé décrits dans la présente description. Le contrôleur (2) peut être un composant implémentant un processeur ou une unité de calcul pour le pilotage d'un dispositif de stockage de données selon le procédé proposé et le contrôle de l'unité de gestion mémoire (4) du dispositif (1), comme par exemple un microcontrôleur.

La mémoire (3) comprend de préférence une mémoire non volatile, par exemple de type flash, et en fonction du mode de réalisation choisi, peut être mise en œuvre sous la forme d'un ou plusieurs composants mémoire montés sur une carte électronique, sous la forme d'un ou plusieurs circuits électronique intégrés à un composant électronique du dispositif de stockage, sous la forme ou intégrée à un dispositif autonome ne comprenant pas nécessairement d'autres éléments du dispositifs de stockage de données, comme par exemple sous la forme d'une carte mémoire (carte mémoire SD (de l'anglais Secure Digital), micro SD (de l'anglais Micro Secure Digital *Card),* SD de Haute Capacité (SDHC, de l'anglais Secure Digital High Capacity), SD de capacité étendue (SDXC, de l'anglais Secure Digital eXtended Capacity).

L'unité de gestion mémoire (4) peut être mise en œuvre, selon le mode de réalisation choisi, sous la forme d'un ou plusieurs logiciel(s), ou d'une combinaison de matériel(s) et de logiciel(s), configurés pour la mise en œuvre de modes de réalisation du procédé de pilotage décrit dans la présente description. La partie logicielle de l'unité de gestion mémoire peut constituer ou faire partie d'un logiciel de pilotage du dispositif de stockage de données. Dans la suite, on désignera par « logiciel de pilotage » (en anglais, « driver ») un ensemble d'un ou plusieurs logiciels configurés pour la mise en œuvre d'un procédé de pilotage d'un dispositif de stockage proposé dans la présente description. En fonction de l'architecture du dispositif, le logiciel de pilotage est configuré pour être exécutable sur un processeur du dispositif de stockage, et/ou sur un processeur d'un équipement informatique auquel une partie du dispositif de stockage (comprenant la mémoire (3)) est connectée.

Dans un ou plusieurs modes de réalisation, le logiciel de pilotage peut comprendre un logiciel d'interface utilisateur, comme par exemple une interface graphique utilisateur (en anglais, GUI, pour Graphie User Interface), configurée pour entre autres permettre une configuration du dispositif de stockage par un utilisateur, comme décrit ci-dessous, et fournir aux utilisateurs, en fonction de leurs profils utilisateur respectifs, des informations sur les données stockées en mémoire du dispositif de stockage.

L'interface (5) peut être mise en œuvre, selon le mode de réalisation choisi, sous la forme d'une combinaison de matériel(s) et de logiciel(s), et comprendre un ou plusieurs connecteurs et un logiciel de pilotage d'interface, par exemple exécutable par le contrôleur (2), et chargé en mémoire du contrôleur (2), en mémoire (3) du dispositif de stockage ou dans tout autre mémoire accessible par un processeur configuré pour exécuter le logiciel de pilotage de l'interface. Dans un ou plusieurs modes de réalisation, l'interface (5) peut comprendre une interface de transfert de données et une interface d'alimentation électrique, chacune de ces interfaces comprenant au moins connecteur et un logiciel de pilotage d'interface.

Par exemple, l'interface (5) peut être de type USB (de l'anglais « Universal Serial Bus »), et comprendre au moins un connecteur de transfert de données, et au moins un connecteur d'alimentation électrique, les connecteurs de transfert de données et d'alimentation étant dans un format conforme à l'un des standards USB (USB 1.0, USB 1.1, USB 2.0, USB 3.0, USB 3.1 et USB 3.2) tels que publiés par l'USB Implementers Forum, et/ou à leurs évolutions. Lorsque l'interface (5) est de type USB, les logiciels de pilotage de l'interface sont aussi configurés pour être conformes à l'un des standards USB existants et/ou à leurs évolutions.

Selon un autre exemple, l'interface (5) peut être de type interface de carte SD ou micro SD, et comprendre au moins un connecteur de transfert de données, et au moins un connecteur d'alimentation électrique, les connecteurs de transfert de données et d'alimentation étant dans un format conforme à l'un des standards de carte SD (SD, mini SD, et micro SD) tels que développés par la SD Card Association (SDA), et/ou à leurs évolutions. Lorsque l'interface (5) est de type carte SD, les logiciels de pilotage de l'interface sont aussi configurés pour être conformes à l'un des standards de carte SD existants et/ou à leurs évolutions.

Le dispositif (1) peut être mis en oeuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les *SOC* (*System On Chip*) ou système sur puce sont des systèmes embarqués qui intègrent tous les composants d'un système électronique dans une puce unique. Un *ASIC* (*Application-specific Integrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA (Field-Programmable Gate Array)* sont des circuits électroniques reconfigurables par l'utilisateur.

Le dispositif de stockage de données (1) peut également utiliser des architectures hybrides, comme par exemple des architectures basées sur un CPU+FPGA, un GPU (*Graphics Processing Unit*) ou un MPPA (*Multi-Purpose Processor Array*).

En fonction du mode de réalisation, différentes architectures du dispositif de stockage de données peuvent être adoptées, tant pour la partie matérielle du dispositif, que pour la partie logicielle du dispositif, le cas échéant.

Par exemple, dans un mode de réalisation, l'ensemble des éléments formant le dispositif de stockage de données (cet ensemble comprenant, sur l'exemple de la figure 1, l'interface (5), la mémoire (3), l'unité de gestion mémoire (4), le contrôleur (2) et le bus de communication (6)) peut être regroupé dans un même équipement, appareil ou dispositif, comme par exemple une clé USB, une carte mémoire, une carte SIM (de l'anglais Subscriber Identity Module) ou un module eSIM. Une telle configuration (architecture centralisée) présente l'avantage de proposer un dispositif de stockage de données capable de mettre en œuvre un procédé de pilotage tel que proposé dans la présente description de manière autonome, de par le logiciel pilote qu'il embarque, exécutable par le processeur dont il est doté. Aussi, le schéma de pilotage de dispositif de stockage proposé peut être mis en œuvre dans un ou plusieurs modes de réalisation dans toute carte mémoire dotée d'un processeur ou par une carte électronique ou un composant électronique sur lequel les éléments qui composent le dispositif de stockage, tant matériels que logiciels le cas échéant, sont intégrés et/ou implantés.

Dans un autre mode de réalisation, certains au moins des éléments formant le dispositif de stockage de données (parmi lesquels, sur l'exemple de la figure 1, l'interface (5), la mémoire (3), l'unité de gestion mémoire (4), le contrôleur (2) et/ou le bus de communication (6)) peuvent être distribués sur plusieurs équipements, appareils ou dispositifs. Par exemple, en référence à la figure 1, la mémoire (3) du dispositif de stockage peut être un support de stockage de données amovible, tel qu'une carte mémoire amovible (par exemple une carte SD, de format normal, mini ou micro), tandis que le contrôleur (2) peut comprendre, dans un mode de réalisation, un microcontrôleur de gestion de la carte mémoire embarqué sur la carte, ou dans un autre mode de réalisation, un processeur d'un équipement auquel la carte mémoire est connectée. Cet équipement peut être tout équipement informatique apte à piloter une carte mémoire à laquelle il est connecté, comme par exemple un ordinateur, un ordinateur personnel (PC), une console industrielle, un tableau de bord de véhicule, un téléphone portable, une tablette, un appareil photo numérique, un caméscope vidéo numérique, etc.

Dans d'autres modes de réalisation utilisant une architecture distribuée, le dispositif de stockage peut comprendre un support de stockage amovible, tel qu'une clé USB ou une carte SD, doté ou non d'un microcontrôleur interne, et un logiciel pilote configuré pour piloter l'utilisation du support de stockage amovible, exécutable par un processeur ne faisant pas partie du dispositif de stockage, comme par exemple le processeur d'un ordinateur auquel le dispositif de stockage est connecté.

De telles configurations (selon une architecture distribuée) présentent l'avantage de permettre la mise en œuvre d'un procédé de pilotage tel que proposé dans la présente description sur tout support de stockage de données, notamment amovible, comme par exemple toute clé USB ou carte mémoire SD disponible dans le commerce.

Par exemple, dans un ou plusieurs modes de réalisation, en référence à la figure 1, l'unité de gestion mémoire (4) du dispositif de stockage (1) peut être mise en œuvre sous forme d'un logiciel (un programme d'ordinateur, comprenant des instructions sous la forme de code logiciel - code source, objet et/ou code exécutable, exécutable par un processeur auquel la mémoire (3) (par exemple une carte SD) est connectée), éventuellement intégré à un logiciel pilote du support de stockage de données.

L'homme du métier comprendra que le procédé de pilotage de dispositif de stockage de données proposé n'est pas limité à une architecture particulière du dispositif de stockage de données, et qu'il peut être mis en œuvre sur des dispositifs ayant une architecture différente de celles présentées ci-dessus, par exemple en ce qu'elle combine les architecture présentées ci-dessus au sein d'une architecture hybride.

On décrit ci-après des procédés de configuration d'un dispositif de stockage de données pour la mise en œuvre du procédé de pilotage selon un ou plusieurs modes de réalisation.

Dans un ou plusieurs modes de réalisation, la mémoire du dispositif de stockage de données peut être partitionnée en une pluralité de partitions.

En référence à la **Figure 2****,** deux partitions (11, 12) peuvent être ainsi créées en mémoire (10) du dispositif de stockage, l'une d'entre elles (12), dite partition système, étant réservée pour des données système du dispositif. L'autre partition (11) peut être destinée au stockage de données dans le cadre d'une utilisation du dispositif de stockage de données.

En variante, plusieurs partitions destinées au stockage de données peuvent être définies.

On peut ainsi définir une zone de dépose de données (en anglais « dropzone ») (13), comme une zone de la mémoire du dispositif de stockage de données, correspondant éventuellement à une ou plusieurs partitions de la mémoire du dispositif.

Dans l'exemple illustré par la figure 2, la zone de dépose (13) peut être définie comme coïncidant avec la partition (11) de stockage de données de la mémoire (10) du dispositif.

Dans le cas de figure où plusieurs partitions destinées au stockage de données sont créées en mémoire du dispositif, la zone de dépose peut être définie comme coïncidant avec une ou plusieurs de ces partitions de stockage de données

Les partitions ainsi créées en mémoire du dispositif de stockage de données peuvent ensuite être formatées, selon tout type de format de système de fichiers, tels que le format FAT (de l'anglais File Allocation Table) ou le format NTFS. De préférence, le format FAT est utilisé pour générer une table d'allocation de fichiers selon un format compatible avec de nombreux systèmes d'exploitation (dont Windows, MacOS, Linux, ou Android) pour des ordinateurs, tablettes ou smartphones.

Dans un ou plusieurs modes de réalisation, la partition système peut être configurée après avoir été formatée pour stocker un ou plusieurs logiciels de pilotage du dispositif de stockage. En référence à la figure 1, la partition système peut notamment stocker un logiciel de l'unité de gestion mémoire (4) dans les modes de réalisations où l'unité de gestion mémoire (4) est mise en œuvre, au moins en partie, sous la forme d'un logiciel stocké, du moins en partie, dans la mémoire du dispositif de stockage.

Dans un mode de réalisation, dit « mode firmware », correspondant dans un ou plusieurs modes de réalisation à l'architecture centralisée décrite ci-dessus, le logiciel de l'unité de gestion mémoire peut être configuré pour être exécuté par le processeur du contrôleur (2) du dispositif de stockage (1). Il peut dans ce cas être préchargé en mémoire du dispositif de stockage, par exemple lors d'une configuration initiale du dispositif de stockage dans le cadre de la fabrication du dispositif. Ce logiciel est ainsi conçu pour être embarqué sur le dispositif de stockage, et être exécuté sur détection d'une utilisation du dispositif de stockage par un utilisateur, par exemple dans un mode de réalisation lors d'une connexion du dispositif de stockage à un équipement informatique, tel qu'un ordinateur, une tablette, un smartphone, un ordinateur personnel (PC), un drone, une console industrielle, un tableau de bord de véhicule etc.

Dans ce mode de réalisation, le dispositif de stockage est un dispositif intelligent en ce qu'il comprend un processeur et une mémoire dans laquelle un logiciel de pilotage, conçu pour être exécuté de manière autonome par le processeur, est chargé.

De préférence, la partition système de la mémoire du dispositif de stockage peut être protégée en lecture, écriture, et effacement, de manière à ne pas corrompre, intentionnellement ou non, le logiciel (firmware) de pilotage du dispositif de stockage chargé dans cette partition système.

Par exemple, une clé USB configurée en mode firmware peut être proposée aux utilisateurs avec un logiciel embarqué, ce qui en fait une clé intelligente. Dans ce cas, il n'est pas nécessaire d'obtenir (par exemple par téléchargement depuis un serveur de logiciels pilotes, ou par mise à jour du système d'exploitation exécuté sur l'équipement informatique auquel la clé est connectée) un logiciel pilote, le logiciel embarqué étant configuré pour fournir différentes fonctionnalités lorsqu'il est exécuté par un processeur de la clé, et par exemple embarquer un OS spécifique, gérer une cryptographie spécifique, etc....

Dans un autre mode de réalisation, dit « mode pilote » ou « mode driver », correspondant dans un ou plusieurs modes de réalisation à l'architecture distribuée décrite ci-dessus, le processeur du contrôleur (2) du dispositif de stockage apte à exécuter le logiciel de l'unité de gestion mémoire (4) peut être un processeur d'un premier équipement informatique (par exemple un ordinateur, un smartphone, une tablette, un drone, un appareil photo, un caméscope numérique, un ordinateur personnel (PC), une console industrielle, un tableau de bord de véhicule etc.) auquel un second équipement informatique, comprenant la mémoire (3), (par exemple une clé USB, une carte mémoire (de type SD)) est connecté.

Ce logiciel peut ainsi être configuré pour être exécuté sur un processeur du premier équipement informatique, après avoir été chargé en mémoire de ce premier équipement informatique (par exemple par téléchargement depuis un serveur de logiciels pilotes, ou par mise à jour du système d'exploitation exécuté sur le premier équipement informatique), sur détection d'une utilisation du dispositif de stockage par un utilisateur, par exemple lors d'une connexion du deuxième équipement informatique au premier équipement informatique. Ce logiciel peut en outre être intégré dans un logiciel pilote du deuxième équipement informatique qu'un utilisateur doit obtenir pour pouvoir utiliser le deuxième équipement informatique.

Par exemple, un utilisateur souhaitant utiliser une clé USB ou une carte SD selon un procédé de pilotage tel que proposé dans la présente description, peut au préalable obtenir un logiciel pilote de la clé USB (respectivement de la carte SD) qui intégrera une unité de gestion mémoire configurée pour la mise en œuvre d'un procédé de pilotage tel que proposé dans la présente description. La gestion des droits d'accès d'un utilisateur, décrite ci-après dans un ou plusieurs modes de réalisation du procédé de pilotage proposé ici, est alors mise en oeuvre par le biais de l'exécution du pilote de la clé USB (respectivement de la carte SD) par un processeur de l'équipement informatique auquel la clé USB (respectivement la carte SD) est connectée.

Une clé USB configurée en mode pilote peut ainsi être utilisable après installation et sur exécution d'un logiciel pilote de la clé, depuis l'équipement informatique auquel la clé est connectée, quel que soit l'utilisateur de cet équipement informatique. Ainsi, toute clé USB standard, disponible dans le commerce, peut avantageusement être utilisée pour la mise en œuvre du procédé de pilotage proposé dans la présente description, pour peu que chaque utilisateur de la clé obtienne, installe et exécute un logiciel pilote de la clé sur l'équipement informatique auquel la clé est connectée.

Dans les modes de réalisations où le dispositif est configuré en mode pilote, le dispositif peut avantageusement être configuré pour permettre une reconnaissance automatique d'une utilisation du dispositif de stockage par un utilisateur, par exemple par reconnaissance automatique d'une connexion du deuxième équipement informatique au premier équipement informatique, de manière à déclencher l'exécution du logiciel pilote sur le premier équipement informatique une fois que ce logiciel a été installé sur cet équipement, à chaque utilisation du dispositif (par exemple sur connexion du deuxième équipement informatique au premier équipement informatique).

En outre, le premier chargement du logiciel pilote sur ce premier équipement informatique peut avantageusement être simplifié en utilisant un logiciel de type « autorun », configuré pour obtenir le logiciel pilote du dispositif sur détection d'une connexion du deuxième équipement informatique au premier équipement informatique, et sur détermination que le logiciel pilote n'est pas installé sur le premier équipement informatique.

Dans un ou plusieurs modes de réalisation, le logiciel pilote de la clé peut être configuré pour effectuer un cryptage des données stockées sur une ou plusieurs des partitions de la mémoire du dispositif de stockage, selon un algorithme de cryptage ou chiffrement, tel qu'un algorithme de chiffrement à clé symétrique (par exemple, DES, TDES, RC2, RC4, RC5, etc.) ou un algorithme de chiffrement asymétrique (par exemple RSA, DSA, ECC, etc.).

Par exemple, dans un mode de réalisation utilisant une partition système, les données stockées dans cette partition peuvent être cryptées pour protéger leur intégrité vis-à-vis des utilisateurs du dispositif, notamment lorsque celui-ci est configuré en mode firmware et que le logiciel pilote est stocké dans une partition système de la mémoire du dispositif.

Dans un ou plusieurs modes de réalisation, le logiciel pilote de la clé peut être configuré pour en outre proposer ou imposer à un utilisateur du dispositif le chiffrement de données stockées en mémoire du dispositif de stockage des données sur détection de données stockées en mémoire qui ne sont pas chiffrées.

Dans un ou plusieurs modes de réalisation, le logiciel pilote de la clé peut être configuré pour en outre proposer ou imposer à un utilisateur du dispositif la création d'une ou plusieurs partitions dans la mémoire du dispositif, par exemple pour configurer une zone de dépose de données (« dropzone »), sur détection de l'absence de partitions et/ou de l'absence de partitions de stockage de données configurées en mémoire du dispositif. Dans ce mode de réalisation, le logiciel pilote peut être en outre configuré pour reconnaître qu'une ou plusieurs partitions ont déjà été configurées en mémoire du dispositif, par exemple reconnaître qu'une ou plusieurs partitions de stockage de données ont déjà été configurées en mémoire du dispositif (et notamment une dropzone) et à l'inverse ne pas proposer la création de partitions en mémoire du dispositif dans ces cas de figure.

Dans un ou plusieurs modes de réalisation (en particulier ceux correspondants au mode pilote), le formatage de la ou des partitions créées en mémoire du dispositif de stockage peut être réalisé selon un format spécifique, par exemple avec une table d'allocation de fichiers spécifique (et notamment différente d'une table conforme au standard FAT), de manière à éviter que les fichiers stockés en mémoire du dispositif de stockage puissent être visible d'un utilisateur utilisant un pilote standard. Ainsi, la mémoire d'un dispositif de stockage de données sous forme de clé USB standard peut être formatée selon un format propriétaire, par exemple en générant une table d'allocation de données en mémoire ayant un format propriétaire, créant, et/ou par chiffrement d'une table d'allocation de données en mémoire (telle qu'une table d'allocation de fichiers), de manière à éviter que les fichiers stockés en mémoire de la clé USB puissent être visibles par tout utilisateur utilisant un logiciel pilote standard capable de piloter une clé USB standard.

Dans un ou plusieurs modes de réalisation (en particulier ceux correspondants au mode firmware ou au mode pilote), une interface logicielle, par exemple de type interface de programmation (en anglais Application Programming Interface, ou API), peut être prévue et chargée dans la partition système, et configurée pour permettre l'accès aux données stockées dans cette partition, en particulier les données du logiciel de l'unité de gestion mémoire, pour échanger des données avec l'unité de gestion mémoire, effectuer une maintenance corrective et/ou évolutive du logiciel de l'unité de gestion mémoire, etc.

Une zone de dépose de données (« dropzone ») peut ainsi être configurée en mémoire du dispositif de stockage de données, en utilisant un partitionnement de la mémoire, un formatage et/ou un chiffrement spécifique de cette zone.

Différents modes de réalisation du procédé de pilotage d'un dispositif de stockage de données proposé sont décrits ci-après.

Le pilotage d'un dispositif de stockage de données proposé utilise au moins deux profils utilisateur du dispositif, dont un premier profil utilisateur comprenant des droits d'accès autorisant au moins l'écriture et la lecture de données dans une mémoire du dispositif de stockage de données, et un deuxième profil utilisateur comprenant des droits d'accès permettant l'écriture de données dans la mémoire du dispositif de stockage de données et interdisant au moins la lecture, dans la mémoire du dispositif de stockage de données, de données qui n'ont pas été précédemment écrites par l'utilisateur.

Dans un ou plusieurs modes de réalisation, ces profils utilisateur peuvent être créés et configurés lors d'une phase de configuration du dispositif de stockage de données par un premier utilisateur, par exemple un utilisateur propriétaire du dispositif, puis être sauvegardés en mémoire du dispositif de stockage de données.

La configuration d'un profil utilisateur peut typiquement inclure la définition de droits d'accès ouverts aux utilisateurs correspondant au profil, parmi lesquels l'accès en écriture de données en mémoire du dispositif de stockage (comprenant éventuellement l'accès en modification de données écrites en mémoire du dispositif de stockage), l'accès en lecture de données stockées en mémoire du dispositif de stockage, et l'accès en effacement de données stockées en mémoire du dispositif de stockage.

La configuration d'un profil utilisateur peut en outre comprendre la création d'au moins une association entre le profil utilisateur et un utilisateur, par exemple par le biais d'un identifiant de l'utilisateur.

La configuration du dispositif, et en particulier la configuration des profils utilisateur, peut avantageusement être effectuée dans un ou plusieurs modes de réalisation par le biais d'une interface utilisateur graphique, éventuellement intégrée à une application logicielle exécutée sur un équipement informatique (par exemple un smartphone ou une tablette) auquel le dispositif est connecté pour sa configuration

En variante, les premier et deuxième profils utilisateur peuvent avoir été préconfigurés sur le dispositif de stockage, de sorte que leur configuration par un utilisateur du dispositif peut ne comprendre que la création d'au moins une association entre au moins un profil utilisateur et un utilisateur, par exemple la création d'une association entre au moins un utilisateur et le premier profil utilisateur.

Dans un ou plusieurs modes de réalisation, seules une ou plusieurs associations entre le premier profil utilisateur et au moins un utilisateur peuvent être créées, les utilisateurs du dispositif de stockage qui ne sont pas associés au premier profil utilisateur étant considérés par défaut comme associés au deuxième profil utilisateur.

Par exemple, un premier utilisateur du dispositif de stockage, identifié par un identifiant utilisateur *Id_owner,* peut être associé au premier profil utilisateur comprenant des droits d'accès autorisant au moins l'écriture et la lecture de données dans une mémoire du dispositif de stockage de données, par le biais de son identifiant *Id_owner.* Tous les autres utilisateurs du dispositif de stockage, à supposer qu'aucun d'entre eux n'est associé au premier profil utilisateur, sont alors considérés par défaut comme associés au deuxième profil utilisateur comprenant des droits d'accès permettant l'écriture de données dans la mémoire du dispositif de stockage de données et interdisant au moins la lecture de données dans la mémoire du dispositif de stockage de données.

Aussi, dans un ou plusieurs modes de réalisation, un utilisateur du dispositif de stockage est associé à l'un ou l'autre des premier et deuxième profils utilisateur, de manière explicite par configuration du profil, ou par défaut.

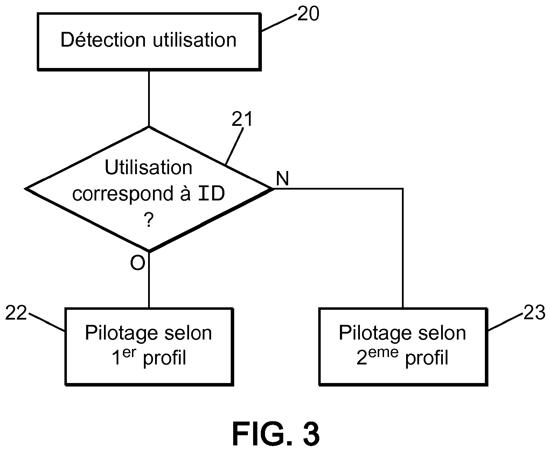

En référence à la **figure 3****,** dans un ou plusieurs modes de réalisation, le pilotage du dispositif de stockage peut comprendre la détection (étape 20) d'une utilisation du dispositif par un utilisateur en détectant que le dispositif a été connecté à un équipement informatique, comme par exemple un ordinateur personnel (PC), un ordinateur, un smartphone, une tablette, un appareil photo, un caméscope vidéo, un drone, une console industrielle, un tableau de bord de véhicule ou, de manière générale, à tout équipement informatique ou électronique auquel le dispositif de stockage peut être connecté, que ce soit par voie filaire ou sans-fil.

Par exemple, dans le cas d'un dispositif de stockage équipé d'une interface USB, le pilote USB apte à être exécuté par un processeur du dispositif de stockage peut détecter que le dispositif de stockage est alimenté électriquement par le biais de l'interface USB, et donc que le dispositif de stockage est en cours d'utilisation.

Suite à la détection d'une utilisation du dispositif par un utilisateur, il peut être déterminé (étape 21) si l'utilisateur correspond à un identifiant associé au premier profil utilisateur, par exemple l'identifiant utilisateur *Id_owner* décrit ci-dessus, associé au premier profil utilisateur.

S'il est déterminé que l'utilisateur correspond à l'identifiant associé au premier profil utilisateur, l'utilisation du dispositif de stockage de données est commandée selon le premier profil utilisateur (étape 22), fournissant ainsi à l'utilisateur des droits d'accès autorisant au moins l'écriture et la lecture de données en mémoire du dispositif de stockage.

S'il est au contraire déterminé que l'utilisateur ne correspond pas à l'identifiant associé au premier profil utilisateur, l'utilisation du dispositif de stockage de données est commandée selon le deuxième profil utilisateur (étape 23), autorisant l'utilisateur à écrire des données dans la mémoire du dispositif de stockage de données mais lui interdisant au moins la lecture, dans la mémoire du dispositif, de données qui n'ont pas été précédemment écrites par cet utilisateur.

Dans un ou plusieurs modes de réalisation, l'identifiant associé au premier profil utilisateur est un identifiant (par exemple un identifiant prédéterminé) pouvant être stocké dans la mémoire du dispositif de stockage de données de manière à avantageusement permettre un fonctionnement autonome du dispositif de stockage de données.

En variante, l'identifiant associé au premier profil utilisateur est un identifiant (par exemple un identifiant prédéterminé) pouvant être stocké en mémoire d'un ou plusieurs serveurs de données, comme décrit ci-dessus, par exemple dans le cadre d'un service de Cloud, auquel cas le dispositif de stockage de données peut être configuré pour interroger ce ou ces serveurs de données sur détection d'une utilisation du dispositif.

Dans ce cas de figure, les données du ou des profil(s) utilisateur qui auront été générés, et/ou les données d'association de ces profils avec des utilisateurs peuvent être stockées et gérées à distance, au sein de serveurs de données distants. Par exemple, des éléments d'identification d'utilisateur (en anglais, « credentials ») peuvent être gérés à distance, et ne pas être conservés au sein du support de stockage. Ce mode de réalisation présente l'avantage de mieux sécuriser les éléments d'identification d'utilisateur, par exemple en cas de perte ou de vol du dispositif de stockage.

A l'inverse, des éléments d'identification d'utilisateur peuvent être gérés localement, c'est-à-dire au sein du dispositif de stockage, pour avantageusement permettre un fonctionnement complètement autonome de ce dispositif.

Dans un ou plusieurs modes de réalisation, la détermination d'une correspondance entre l'utilisateur et l'identifiant associé au premier profil utilisateur peut comprendre une identification de l'utilisateur sur la base de l'identifiant associé au premier profil utilisateur, ainsi qu'éventuellement une authentification de l'utilisateur.

En fonction du mode de réalisation, cette identification de l'utilisateur peut utiliser tout type d'élément d'identification utilisateur, tel qu'un couple identifiant et mot de passe, saisi par l'utilisateur, puis vérifié par le dispositif de stockage de données lui-même, ou un serveur de données interrogé par le dispositif de stockage de données selon l'endroit où est mémorisé l'identifiant associé au premier profil utilisateur, etc.

L'authentification peut utiliser tout type d'élément d'authentification (authentification vocale, par empreinte digitale, etc.). Ces identification et/ou authentification peuvent par ailleurs être effectuées selon tout protocole d'identification et/ou authentification connu en soi, telle que, par exemple, Mobile Connect dans les modes de réalisation où le dispositif de stockage est équipé d'une carte SIM ou d'un module eSIM.

Dans un ou plusieurs modes de réalisation, les droits d'accès associés au deuxième profil utilisateur autorisant la lecture de données dans la mesure où ces données ont été précédemment écrites par l'utilisateur du dispositif peuvent être gérés dans le cadre de sessions correspondant à une connexion du dispositif sur un équipement informatique. Par exemple, le deuxième profil pourra être configuré pour donner accès, à un utilisateur de ce profil, en lecture aux données qu'il a écrites en mémoire du dispositif (par exemple déposées dans une « dropzone » du dispositif) pendant une session d'utilisation correspondant à la période durant laquelle l'utilisateur a utilisé le dispositif en le connectant à l'équipement informatique. Le pilotage du dispositif peut alors être configuré pour terminer la session d'utilisation sur réalisation d'une condition prédéterminée, comme par exemple sur détection d'une déconnexion du dispositif de l'équipement informatique, ou expiration d'une temporisation de durée préconfigurée. L'utilisateur de deuxième profil aura donc accès en lecture, par exemple par l'intermédiaire d'une interface utilisateur graphique, pendant la durée de sa session d'utilisation, aux données qu'il écrit en mémoire du dispositif. Cela lui permet avantageusement de contrôler ce qu'il écrit en mémoire du dispositif pendant la durée de sa session. Le deuxième profil pourra aussi être configuré pour qu'à la suite de l'expiration de sa session d'utilisation, l'utilisateur n'ait plus accès aux données qu'il a écrites en mémoire du dispositif pendant la session d'utilisation qui est alors expirée.

En variante, dans un ou plusieurs modes de réalisation, les droits d'accès associés au deuxième profil utilisateur autorisant la lecture de données dans la mesure où ces données ont été précédemment écrites par l'utilisateur du dispositif pourront être gérés sur la base d'une identification (éventuellement combinée avec une authentification) de l'utilisateur ayant le deuxième profil, identification et le cas échéant authentification qui pourront, en fonction du mode de réalisation, être mises en oeuvre pour la configuration du deuxième profil de manières similaires à celles décrites dans la présente description pour l'identification et l'authentification d'un utilisateur de premier profil. Cette gestion d'utilisateurs de deuxième profil en utilisant une identification, éventuellement combinée à une authentification, pourra n'être mise en oeuvre que pour certains utilisateurs de deuxième profil. Elle présente l'avantage de permettre l'accès, à des utilisateurs de deuxième profil, en lecture à des données qu'ils auront précédemment écrites en mémoire du dispositif de stockage, indépendamment de la notion de session d'utilisation exposée ci-dessus.

Dans ces modes de réalisation, un utilisateur de deuxième profil qui s'identifie lors de son utilisation du dispositif, peut avoir accès en lecture aux données qu'il a écrites en mémoire du dispositif. Le pilotage du dispositif peut être ainsi configuré pour gérer des associations entre un identifiant utilisateur de deuxième profil et données écrites en mémoire par cet utilisateur, associations qui peuvent être stockées en mémoire, par exemple en mémoire du dispositif de stockage.

Dans un ou plusieurs modes de réalisation, les droits d'accès associés au deuxième profil utilisateur interdisent la lecture de données écrites en mémoire, indépendamment de l'utilisateur de deuxième profil ayant écrit ces données. Cette configuration des droits d'accès associés au deuxième profil utilisateur permet une gestion simplifiée des droits d'accès associés au deuxième profil, tout en renforçant la protection de la confidentialité des données écrites en mémoire du dispositif.

Dans des modes de réalisation dans lesquels le dispositif de stockage tel que proposé est mis en œuvre avec une carte mémoire insérée dans un équipement informatique ou électronique, tel qu'un smartphone ou une tablette, et le procédé de pilotage proposé est mis en œuvre par le biais d'un logiciel de pilotage de la carte mémoire, éventuellement intégré à une application logicielle native exécutée sur le smartphone ou sur la tablette, l'identification et/ou l'authentification effectuées par le pilote peuvent utiliser l'identification et/ou l'authentification mises en œuvre, le cas échéant, pour l'utilisation du smartphone ou de la tablette tels que, en particulier, des éléments d'identification et/ou d'authentification utilisés pour l'accès à des réseaux sociaux sur le smartphone ou la tablette.

Dans un ou plusieurs modes de réalisation, la mémoire du dispositif de stockage peut être configurée pour définir une zone mémoire (dropzone) à laquelle les accès sont contrôlés selon le procédé de pilotage décrit dans la présente description. Dans ces modes de réalisation, les droits d'accès compris dans le deuxième profil utilisateur peuvent être configurés pour être applicables à cette zone mémoire. Dans d'autres modes de réalisation, ces droits d'accès compris dans le deuxième profil utilisateur peuvent être configurés pour être circonscrits à cette zone de la mémoire du dispositif de stockage de données, et ainsi n'être applicables qu'à cette zone mémoire.

Dans un ou plusieurs modes de réalisation, la mémoire du dispositif de stockage peut être configurée pour comprendre une ou plusieurs partitions, une partition étant par exemple définie comme zone de dépose de données à laquelle les accès sont contrôlés selon le procédé de pilotage décrit dans la présente description. Dans ces modes de réalisation, les droits d'accès compris dans le deuxième profil utilisateur peuvent être configurés pour être applicables à une partition prédéfinie de la mémoire du dispositif de stockage de données, correspondant par exemple à la zone de dépose de données. Dans d'autres modes de réalisation, ces droits d'accès compris dans le deuxième profil utilisateur peuvent être configurés pour être circonscrits à une partition prédéfinie de la mémoire du dispositif de stockage de données, et n'être applicables qu'à cette partition.

En outre, dans un ou plusieurs modes de réalisation, le deuxième profil utilisateur peut être configuré pour ne gérer l'accès qu'à une partition de la mémoire du dispositif de stockage, par exemple la zone de dépose, de sorte que les autres partitions, qui peuvent avoir été créées et configurées en mémoire du dispositif de stockage, ne soient pas accessibles ni visibles d'un utilisateur associé au deuxième profil utilisateur.

Dans un ou plusieurs modes de réalisation, alors que le premier profil utilisateur est configuré pour inclure des droits d'accès autorisant en outre l'effacement de données dans la mémoire du dispositif de stockage de données, le deuxième profil utilisateur peut être configuré pour au contraire inclure des droits d'accès interdisant en outre l'effacement de données dans la mémoire du dispositif de stockage de données. Dans ce cas de figure, alors que le premier profil utilisateur comprend des droits d'accès autorisant aussi bien l'écriture et la lecture que l'effacement de données stockées en mémoire du dispositif, le deuxième profil utilisateur comprend des droits d'accès autorisant certes l'écriture de données en mémoire du dispositif, mais interdisant la lecture de données et l'effacement de données stockées en mémoire du dispositif. Ainsi, les utilisateurs associés à ce deuxième profil ne peuvent non seulement pas lire les données mémorisées, mais ils ne peuvent pas non plus les effacer.

Dans un ou plusieurs modes de réalisation avantageux, les droits d'accès compris dans le deuxième profil utilisateur peuvent se restreindre uniquement à l'écriture de données dans la mémoire du dispositif de stockage de données. Dans ce cas de figure particulier, un utilisateur non associé au premier profil utilisateur, et reconnu comme tel lors de son utilisation du dispositif de stockage, ne peut que déposer des données en mémoire du dispositif de stockage. Il n'aura aucun accès à des informations concernant les données stockées en mémoire du dispositif de stockage, qu'il s'agisse des données stockées par lui-même ou par un autre utilisateur, et il ne pourra effectuer aucune action à leur encontre. La confidentialité des données stockées en mémoire du dispositif de stockage, gérées par un utilisateur associé au premier profil utilisateur, peut ainsi avantageusement être optimisée en limitant au maximum les droits associés au deuxième profil utilisateur, en particulier parmi des droits d'accès en écriture/lecture/modification/effacement.

Dans un ou plusieurs modes de réalisation, le deuxième profil utilisateur comprend des droits d'accès l'accès à des informations relatives aux données stockées dans la mémoire du dispositif de stockage. Un utilisateur ayant le premier profil utilisateur, par exemple propriétaire du dispositif de stockage, peut en effet souhaiter ouvrir ou non, en tout ou partie, l'accès à ces informations pour les utilisateurs ayant le deuxième profil utilisateur.

Dans un mode de réalisation, le deuxième profil utilisateur peut comprendre des droits d'accès interdisant l'accès à des informations relatives aux données stockées dans la mémoire du dispositif de stockage. Dans ce cas de figure, un utilisateur ayant le deuxième profil utilisateur peut n'avoir accès à aucune information concernant les données stockées dans la mémoire du dispositif de stockage, et en particulier dans la zone de dépose (par exemple la partition « dropzone ») dans les modes de réalisation où celle-ci a été définie. Par exemple, le deuxième profil utilisateur peut comprendre des droits d'accès interdisant l'affichage, sur un dispositif d'affichage, d'informations relatives aux données stockées dans la mémoire du dispositif de stockage. En fonction du mode de réalisation, le dispositif d'affichage peut être intégré dans le dispositif de stockage de données, ou dans un équipement informatique auquel le dispositif de stockage de données est connecté (par exemple l'écran d'affichage d'un ordinateur, un smartphone, une tablette, un appareil photo, etc. auquel une clé USB ou une carte mémoire est connecté, et sur lequel est exécuté un logiciel pilote de la clé ou de la carte incorporant un contrôleur d'interface graphique pour afficher des informations relatives à la clé ou à la carte).

Ce mode de réalisation peut de préférence être combiné avec les modes de réalisation dans lesquels les droits d'accès du deuxième profil utilisateur sont particulièrement restreints, par exemple à la seule écriture de données en mémoire (par exemple dans une zone de dépose prédéfinie) du dispositif de stockage.

Dans un autre mode de réalisation, le deuxième profil utilisateur peut comprendre des droits d'accès autorisant l'accès à des informations relatives à une capacité de stockage de données disponible dans la mémoire du dispositif de stockage. Ce mode de réalisation peut aussi avantageusement être combiné avec les modes de réalisation dans lesquels les droits d'accès du deuxième profil utilisateur sont particulièrement restreints, par exemple à la seule écriture de données en mémoire (par exemple dans un zone de dépose prédéfinie) du dispositif de stockage.

Dans ce cas de figure, un utilisateur ayant le deuxième profil utilisateur peut obtenir une information, par exemple par le biais d'un dispositif d'affichage, relative à la capacité de stockage disponible dans la mémoire du dispositif pour l'écriture de données, dans la mesure où l'accès en écriture est autorisé dans le deuxième profil. En fonction du mode de réalisation, le dispositif d'affichage peut là encore être intégré dans le dispositif de stockage de données, ou dans un équipement informatique auquel le dispositif de stockage de données est connecté.

Dans les modes de réalisation où les droits définis pour le deuxième profil utilisateur sont circonscrits à une zone préconfigurée de la mémoire du dispositif (« dropzone ») correspondant le cas échéant à une partition de la mémoire du dispositif, les informations relatives à une capacité de stockage de données disponible dans la mémoire du dispositif de stockage qui sont accessibles aux utilisateurs de deuxième profil sont de préférence limitées à des informations relatives à une capacité de stockage de données disponible dans la zone préconfigurée de la mémoire du dispositif (« dropzone »).

Dans un mode de réalisation, l'information de capacité de stockage disponible accessible aux utilisateurs de deuxième profil utilisateur peut être mise à jour à mesure qu'un utilisateur de deuxième profil écrit des données (par exemple, en copiant des fichiers de données) en mémoire du dispositif.

Dans un ou plusieurs modes de réalisation, le pilotage du dispositif de stockage de données peut comprendre la création puis la mise à jour d'un journal (en anglais, « log ») des accès effectués en mémoire du dispositif de stockage.

En fonction du mode de réalisation choisi, le journal des accès peut ne concerner que la ou les zones de mémoire du dispositif pilotées selon les premier et deuxième profils utilisateur proposés par les présentes, que les accès effectués par un utilisateur ayant le premier profil utilisateur ou le deuxième profil utilisateur, que les accès effectués par tout utilisateur n'ayant pas le premier profil utilisateur, ou ne concerner que la ou les zones de mémoire du dispositif pilotées selon le deuxième profil utilisateur proposé par les présentes (comme par exemple une zone de dépose telle que décrit ci-dessus, pouvant occuper une partition de l'espace mémoire du dispositif).

En outre, seul le premier profil utilisateur peut de préférence être configuré pour avoir accès à ce journal des accès, au moins en lecture, voire en lecture et écriture et/ou effacement.

Dans un ou plusieurs modes de réalisation, le pilotage du dispositif de stockage de données peut comprendre la configuration, et l'activation/désactivation d'un gestionnaire d'effacement de données écrites en mémoire du dispositif. Le gestionnaire d'effacement peut être configuré pour effacer des données stockées en mémoire du dispositif après expiration d'un temporisateur configuré à une durée prédéterminée, et déclenché lors de l'écriture des données à effacer en mémoire du dispositif, et/ou être configuré pour effacer des données stockées en mémoire du dispositif de manière périodique (par exemple chaque jour).

En fonction du mode de réalisation choisi, le gestionnaire d'effacement peut être configuré pour traiter des données écrites par tout utilisateur n'ayant pas le premier profil utilisateur, pour traiter des données écrites dans une zone spécifique de la mémoire du dispositif (comme par exemple la zone de dépose décrite ci-dessus), quel que soit le profil de l'utilisateur ayant écrit ces données, ou pour traiter des données écrites dans une zone spécifique de la mémoire du dispositif par tout utilisateur n'ayant pas le premier profil utilisateur (et en particulier par tout utilisateur ayant le deuxième profil utilisateur).

Ce procédé d'effacement automatique des données écrites en mémoire du dispositif de stockage de données permet avantageusement d'assurer un caractère transitoire au stockage de données déposées en mémoire du dispositif de stockage par des utilisateurs n'ayant pas le premier profil utilisateur. Ces derniers peuvent ainsi être rassurés, par exemple dans le cas d'usage où ils souhaitent temporairement partager des données sensibles en les stockant en mémoire d'un dispositif de stockage piloté selon le procédé proposé pour les besoins d'une présentation.

Selon un premier exemple d'utilisation, une clé USB peut avoir été configurée pour être pilotée selon le procédé proposé dans la présente description. La clé USB peut avoir été configurée en mode driver, c'est-à-dire embarquer un logiciel pilote de type firmware préchargé en mémoire, auquel cas il s'agira d'une clé intelligente en ce qu'elle peut fonctionner de manière autonome, i.e. sans qu'il soit nécessaire de charger et d'exécuter un logiciel pilote sur tout ordinateur auquel la clé est connectée. En variante, la clé USB peut être une clé USB standard, et être utilisée en mode pilote, c'est-à-dire en étant pilotée par un logiciel pilote chargé et exécuté sur un ordinateur auquel la clé est connectée. L'espace mémoire disponible dans la clé peut avoir été partitionné pour définir une partition « dropzone », et les partitions avoir été formatées, éventuellement selon un schéma propriétaire comme décrit ci-dessus. En variante, une zone de dépose (« dropzone ») peut avoir été configurée dans une des partitions de l'espace mémoire de la clé. Le logiciel pilote de la clé peut avoir été configuré pour définir un premier profil utilisateur ayant tous les droits d'accès à la mémoire de la clé, y compris à la « dropzone », et définir un deuxième profil utilisateur ayant des droits d'accès autorisant seulement l'écriture de données dans la « dropzone » et l'obtention d'informations sur la capacité de stockage en mémoire disponible dans la « dropzone ».

Lors d'une utilisation de la clé par connexion de la clé à un ordinateur, le logiciel pilote peut être configuré pour se déclencher et interroger l'utilisateur pour déterminer s'il est ou non associé au premier profil utilisateur. Si l'utilisateur n'est pas associé au premier profil utilisateur, il peut être par défaut associé au deuxième profil utilisateur. Il peut ainsi déposer des fichiers de données dans la « dropzone » afin de les partager avec un utilisateur de premier profil utilisateur, sans pour autant voir les données déjà stockées dans la « dropzone », à l'exception des fichiers qu'il a lui-même stockés dans la « dropzone ». Il peut en outre connaître la capacité de stockage disponible dans la « dropzone », par exemple par le biais d'une interface graphique affichée sur l'écran de son ordinateur, capacité qui est mise à jour au fur et à mesure de sa dépose de fichiers dans la « dropzone ». Il peut en outre être informé que ses données sont conservées pendant un temps prédéterminé sur la « dropzone » (par exemple 1 heure), avant d'être effacées par le logiciel pilote de la clé.

Un utilisateur de premier profil peut quant à lui accéder aux données déposées dans la « dropzone » par un autre utilisateur, après une identification, et éventuellement une authentification, réussies. Il peut ainsi lire, modifier, déplacer et effacer les fichiers déposés dans la « dropzone », et accéder au journal des accès pour s'informer des accès en écriture effectués par d'autres utilisateurs.

La clé USB telle que décrite ci-dessus peut avantageusement être utilisée pour permettre aux participants d'une réunion de partager leurs fichiers de présentation respectifs en les stockant temporairement dans la « dropzone » de la clé USB fournie par un des participants, par exemple l'organisateur de la réunion, ou par un tiers de confiance. La confidentialité des données partagées par chaque participant autre que le fournisseur de la clé est préservée au regard des autres du fait que la « dropzone »apparaît comme un espace mémoire vide à chaque participant, éventuellement doté d'une information sur l'espace de stockage disponible restant en « dropzone ». La clé USB peut ainsi être partagée par plusieurs utilisateurs qui ne sont pas de premier profil, chacun de ces utilisateurs déposant ses données sur la clé sans pouvoir voir les autres données qui y sont stockées lors de la connexion de la clé sur son équipement. Le fournisseur de la clé USB, ayant le premier profil utilisateur, peut ensuite compiler toutes les présentations dans la « dropzone ». Comme expliqué ci-dessus, le logiciel pilote de la clé peut en outre être configuré pour effacer les données stockées en « dropzone » après un temps prédéterminé et/ou de manière périodique.

Un deuxième exemple de mise en oeuvre se rapporte à un support de stockage (clé USB, carte SD, disque amovible, etc.) sécurisé n'autorisant qu'un seul profil « owner » pour celui qui peut lire, éditer et supprimer les fichiers qui y sont déposés, et forçant un mode « guest » ou « write-only » pour tous les autres qui ne peuvent qu'y déposer des fichiers. Le « owner » du support doit tout d'abord l'initialiser lors d'une simple phase de configuration, consistant à partitionner le volume global en y réservant une drop-zone et créant un mot de passe qui la protégera en lecture par la suite. Chaque « guest » ne verra qu'un support vierge depuis son système/explorateur de fichiers sur son ordinateur personnel. La seule information sera celle de la taille disponible. Cette capacité pourra être gérée lors des tentatives de dépôt de fichiers. En outre, après chaque dépôt, le fichier pourra être visible de celui qui l'a lancé, ou pas, selon le mode de réalisation.

Une telle simplicité dans l'expérience impose le développement logiciel de pilotes (« drivers »), afin de contourner le fonctionnement habituel des supports introduits sur les ordinateurs. Ces drivers sont de deux types, pouvant être cumulés : (1) application résidante ou extension système pour les ordinateurs (par ex. Kernel extension : KEXT sur MacOS), et (2) firmware pour le support lui-même (par ex. pour une clé formatée spécifiquement). Le mode de réalisation dépend de l'expérience souhaitée et des contraintes : L'application permet d'utiliser des supports standards mais impose une installation logicielle préalable au premier usage, et ce pour chacun des guests. Le firmware ne nécessite aucune configuration ni installation préalable pour les guests mais impose des supports spécifiques.

La capacité de stockage du support permet de s'en servir non seulement comme espace temporaire d'échange mais aussi comme sauvegarde durable. Dans un mode de réalisation, le firmware du support peut comptabiliser le nombre d'interactions (lectures et écritures) mais aussi le temps écoulé entre elles, afin d'enclencher une suppression automatique « self erasing ».

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé de pilotage proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de pilotage d'un dispositif de stockage de données, comprenant :
- sur détection (20) d'une utilisation du dispositif par un utilisateur par connexion à un équipement informatique, déterminer (21) si l'utilisateur correspond à un identifiant associé à un premier profil utilisateur comprenant des droits d'accès autorisant au moins l'écriture et la lecture de données dans une mémoire du dispositif de stockage de données ;
- s'il est déterminé que l'utilisateur correspond à l'identifiant associé au premier profil utilisateur, commander (22) l'utilisation du dispositif de stockage de données selon le premier profil utilisateur ;
- s'il est déterminé que l'utilisateur ne correspond pas à l'identifiant associé au premier profil utilisateur, commander (23) l'utilisation du dispositif de stockage de données selon un deuxième profil utilisateur comprenant des droits d'accès permettant l'écriture de données dans la mémoire du dispositif de stockage de données et interdisant au moins la lecture, dans la mémoire du dispositif de stockage de données, de données qui n'ont pas été précédemment écrites par l'utilisateur.

2. Procédé selon la revendication 1, dans lequel les droits d'accès compris dans le premier profil utilisateur autorisent en outre l'effacement de données dans la mémoire du dispositif de stockage de données et les droits d'accès compris dans le deuxième profil utilisateur interdisent en outre l'effacement de données dans la mémoire du dispositif de stockage de données.

3. Procédé selon la revendication 1 ou 2, dans lequel les droits d'accès compris dans le deuxième profil utilisateur autorisent seulement l'écriture de données dans la mémoire du dispositif de stockage de données et l'accès à des informations relatives à une capacité de stockage de données disponible dans la mémoire du dispositif de stockage.

4. Procédé selon l'une des revendications 1 à 3, dans lequel les droits d'accès compris dans le deuxième profil utilisateur sont applicables à une partition prédéfinie de la mémoire du dispositif de stockage de données.

5. Procédé selon l'une des revendications 1 à 4, dans lequel le deuxième profil utilisateur comprend des droits d'accès interdisant l'accès à des informations relatives aux données stockées dans la mémoire du dispositif de stockage.

6. Procédé selon la revendication 5, dans lequel le deuxième profil utilisateur comprend des droits d'accès interdisant l'affichage sur un dispositif d'affichage des informations relatives aux données stockées dans la mémoire du dispositif de stockage

7. Procédé selon l'une quelconque des revendications précédentes, dans lequel le deuxième profil utilisateur comprend des droits d'accès autorisant l'accès à des informations relatives à une capacité de stockage de données disponible dans la mémoire du dispositif de stockage.

8. Procédé selon l'une quelconque des revendications précédentes, dans lequel les droits d'accès compris dans le deuxième profil utilisateur interdisent la lecture de toute donnée enregistrée en mémoire du dispositif de stockage de données.

9. Procédé selon l'une des revendications 1 à 6, dans lequel les droits d'accès compris dans le deuxième profil utilisateur autorisent seulement l'écriture de données dans la mémoire du dispositif de stockage de données.

10. Procédé selon l'une quelconque des revendications précédentes, dans lequel l'identifiant associé au premier profil utilisateur est stocké dans la mémoire du dispositif de stockage de données.

11. Procédé selon l'une quelconque des revendications précédentes, dans lequel la détermination d'une correspondance entre l'utilisateur et l'identifiant associé au premier profil utilisateur comprend une identification de l'utilisateur sur la base de l'identifiant associé au premier profil utilisateur.

12. Procédé selon la revendication 11, dans lequel la détermination d'une correspondance entre l'utilisateur et l'identifiant associé au premier profil utilisateur comprend en outre une authentification de l'utilisateur sur la base de l'identifiant associé au premier profil utilisateur.

13. Dispositif de stockage de données, comprenant :
- un processeur,
- une mémoire, et
- une interface de transfert de données, configurée pour échanger des données avec un équipement informatique lorsque le dispositif de stockage de données est connecté audit équipement informatique,
dans lequel le processeur est configuré pour la mise en œuvre d'un procédé de pilotage du dispositif de stockage de données selon l'une quelconque des revendications 1 à 12.

14. Dispositif de stockage de données amovible comprenant un dispositif de stockage de données selon la revendication 13, dans lequel l'interface de transfert de données est de type Universal Serial Bus, USB.

## Patentansprüche

1. Verfahren zum Steuern einer Datenspeichervorrichtung, das enthält:
- bei Erfassung (20) einer Benutzung der Vorrichtung durch einen Benutzer durch Verbindung mit einer Datenverarbeitungsausrüstung, Bestimmen (21), ob der Benutzer einer einem ersten Benutzerprofil zugeordneten Kennung entspricht, die Zugangsrechte enthält, die mindestens das Schreiben und Lesen von Daten in einer Datenspeichervorrichtung erlauben;
- wenn bestimmt wird, dass der Benutzer der dem ersten Benutzerprofil zugeordneten Kennung entspricht, Steuern (22) der Benutzung der Datenspeichervorrichtung gemäß dem ersten Benutzerprofil;
- wenn bestimmt wird, dass der Benutzer nicht der dem ersten Benutzerprofil zugeordneten Kennung entspricht, Steuern (23) der Benutzung der Datenspeichervorrichtung gemäß einem zweiten Benutzerprofil, das Zugangsrechte enthält, die das Schreiben von Daten in den Speicher der Datenspeichervorrichtung erlauben und mindestens das Lesen, im Speicher der Datenspeichervorrichtung, von Daten verbietet, die nicht vorher von dem Benutzer geschrieben wurden.

2. Verfahren nach Anspruch 1, wobei die im ersten Benutzerprofil enthaltenen Zugangsrechte außerdem das Löschen von Daten im Speicher der Datenspeichervorrichtung erlauben, und die im zweiten Benutzerprofil enthaltenen Zugangsrechte außerdem das Löschen von Daten im Speicher der Datenspeichervorrichtung verbieten.

3. Verfahren nach Anspruch 1 oder 2, wobei die im zweiten Benutzerprofil enthaltenen Zugangsrechte nur das Schreiben von Daten in den Speicher der Datenspeichervorrichtung und den Zugang zu Informationen bezüglich einer Datenspeicherkapazität erlauben, die im Speicher der Speichervorrichtung verfügbar ist.

4. Verfahren nach einem der Ansprüche 1 bis 3, wobei die im zweiten Benutzerprofil enthaltenen Zugangsrechte auf eine vordefinierte Partitionierung des Speichers der Datenspeichervorrichtung anwendbar sind.

5. Verfahren nach einem der Ansprüche 1 bis 4, wobei das zweite Benutzerprofil Zugangsrechte enthält, die den Zugang zu Informationen bezüglich der im Speicher der Speichervorrichtung gespeicherten Daten verbieten.

6. Verfahren nach Anspruch 5, wobei das zweite Benutzerprofil Zugangsrechte enthält, die die Anzeige auf einer Anzeigevorrichtung der Informationen bezüglich der im Speicher der Speichervorrichtung gespeicherten Daten verbieten.

7. Verfahren nach einem der vorhergehenden Ansprüche, wobei das zweite Benutzerprofil Zugangsrechte enthält, die den Zugang zu Informationen bezüglich einer Datenspeicherkapazität erlauben, die im Speicher der Speichervorrichtung verfügbar ist.

8. Verfahren nach einem der vorhergehenden Ansprüche, wobei die im zweiten Benutzerprofil enthaltenen Zugangsrechte das Lesen jedes Datenwerts verbieten, der im Speicher der Datenspeichervorrichtung gespeichert ist.

9. Verfahren nach einem der Ansprüche 1 bis 6, wobei die im zweiten Benutzerprofil enthaltenen Zugangsrechte nur das Schreiben von Daten in den Speicher der Datenspeichervorrichtung erlauben.

10. Verfahren nach einem der vorhergehenden Ansprüche, wobei die dem ersten Benutzerprofil zugeordnete Kennung im Speicher der Datenspeichervorrichtung gespeichert ist.

11. Verfahren nach einem der vorhergehenden Ansprüche, wobei die Bestimmung einer Übereinstimmung zwischen dem Benutzer und der dem ersten Benutzerprofil zugeordneten Kennung eine Identifizierung des Benutzers auf der Basis der dem ersten Benutzerprofil zugeordneten Kennung enthält.

12. Verfahren nach Anspruch 11, wobei die Bestimmung einer Übereinstimmung zwischen dem Benutzer und der dem ersten Benutzerprofil zugeordneten Kennung außerdem eine Authentifizierung des Benutzers auf der Basis der dem ersten Benutzerprofil zugeordneten Kennung enthält.

13. Datenspeichervorrichtung, die enthält:
- einen Prozessor,
- eine Speicher, und
- eine Datenübertragungsschnittstelle, die konfiguriert ist, Daten mit einer Datenverarbeitungsausrüstung auszutauschen, wenn die Datenspeichervorrichtung mit der Datenverarbeitungsausrüstung verbunden ist,
wobei der Prozessor für die Durchführung eines Verfahrens zum Steuern der Datenspeichervorrichtung nach einem der Ansprüche 1 bis 12 konfiguriert ist.

14. Entfernbare Datenspeichervorrichtung, die eine Datenspeichervorrichtung nach Anspruch 13 enthält, wobei die Datenübertragungsschnittstelle vom Typ Universal Serial Bus, USB ist.

## Claims

1. Method for controlling a data storage device, comprising:
- on detection (20) of a use of the device by a user by connection to a computer equipment, determining (21) whether the user corresponds to an identifier associated with a first user profile comprising access rights allowing at least the writing and reading of data in a memory of the data storage device;
- if it is determined that the user corresponds to the identifier associated with the first user profile, controlling (22) the use of the data storage device according to the first user profile;
- if it is determined that the user does not correspond to the identifier associated with the first user profile, controlling (23) the use of the data storage device according to a second user profile comprising access rights allowing the writing of data in the memory of the data storage device and prohibiting at least the reading, in the memory of the data storage device, of data which were not previously written by the user.

2. Method according to Claim 1, wherein the access rights included in the first user profile also allow the deletion of data in the memory of the data storage device and the access rights included in the second user profile also prohibit the deleting of data in the memory of the data storage device.

3. Method according to Claim 1 or 2, wherein the access rights included in the second user profile allow only the writing of data in the memory of the data storage device and access to information relating to a data storage capacity of available data in the memory of the storage device.

4. Method according to one of Claims 1 to 3, wherein the access rights included in the second user profile are applicable to a predefined partition of the memory of the data storage device.

5. Method according to one of Claims 1 to 4, wherein the second user profile comprises access rights prohibiting access to information relating to the data stored in the memory of the storage device.

6. Method according to Claim 5, wherein the second user profile comprises access rights prohibiting the display on a display device of the information relating to the data stored in the memory of the storage device.

7. Method according to any one of the preceding claims, wherein the second user profile comprises access rights allowing access to information relating to a data storage capacity available in the memory of the storage device.

8. Method according to any one of the preceding claims, wherein the access rights included in the second user profile prohibit the reading of any datum stored in memory of the data storage device.

9. Method according to one of Claims 1 to 6, wherein the access rights included in the second user profile allow only the writing of data in the memory of the data storage device.

10. Method according to any one of the preceding claims, wherein the identifier associated with the first user profile is stored in the memory of the data storage device.

11. Method according to any one of the preceding claims, wherein the determination of a correspondence between the user and the identifier associated with the first user profile comprises an identification of the user on the basis of the identifier associated with the first user profile.

12. Method according to Claim 11, wherein the determination of a correspondence between the user and the identifier associated with the first user profile further comprises an authentication of the user on the basis of the identifier associated with the first user profile.

13. Data storage device, comprising:
- a processor,
- a memory, and
- a data transfer interface, configured to exchange data with computer equipment when the data storage device is connected to said computer equipment,
wherein the processor is configured to implement a method for controlling the data storage device according to any one of Claims 1 to 12.

14. Removable data storage device comprising a data storage device according to Claim 13, wherein the data transfer interface is of universal serial bus (USB) type.
